# EUROPÄISCHE PATENTSCHRIFT

(11) **EP 1 023 199 B1**
(45) Veröffentlichungstag und Bekanntmachung des Hinweises auf die Patenterteilung: **27.03.2002**
(21) Anmeldenummer: 97945791.8
(22) Anmeldetag: 15.10.1997
(51) Int. Cl.: B60N 2/36, B60N 2/44

(54) **SITZBANK FÜR EIN FAHRZEUG MIT EINER KIPPBAREN RÜCKLEHNE**
BENCH FOR VEHICLE WITH TILTING BACKREST
BANQUETTE POUR VEHICULE POURVUE D'UN DOSSIER BASCULANT

(43) Veröffentlichungstag der Anmeldung: 02.08.2000
(73) Patentinhaber: TWB Presswerk GmbH. & Co. KG., 58089 Hagen (DE)
(72) Erfinder: BLECHER, Peter, D-58091 Hagen (DE)
(74) Vertreter: Dörner, Lothar, Dipl.-Ing.
(86) Internationale Anmeldenummer: DE9702484
(87) Internationale Veröffentlichungsnummer: WO9919164

(56) Entgegenhaltungen:
- DE-A- 2 752 431
- DE-A- 4 405 345
- FR-A- 2 420 424
- GB-A- 2 298 123
- US-A- 4 493 505

## Beschreibung

Die Erfindung betrifft eine Sitzbank für ein Fahrzeug mit einer kippbaren Rücklehne, die in zwei Teile aufgeteilt ist.

Sitzbänke sind in Kraftfahrzeugen im Fond angeordnet. in der Regel sind sie so ausgestaltet, daß drei Personen auf ihnen Platz nehmen können. Die Rücklehnen der Sitzbänke erfüllen dabei zweierlei Aufgaben: zum einen lehnen sich die Fondpassagiere während der Fahrt mit ihrem Rücken an ihnen an; zum anderen trennen sie den Fahrgast- vom Kofferraum. Zur Vergrößerung des Transportvolumens der Fahrzeuge sind die Rücklehnen der Sitzbänke kippbar im Fahrzeug angeordnet. Zur Erhöhung der Variabilität sind sie zusätzlich geteilt ausgeführt. In diesem Fall stützen sich die beiden Teile der Rücklehne nur noch an drei Punkten an der Fahrzeugkarosserie bzw. dem Fahrzeugboden ab.

Die passive Sicherheit der auf der Sitzbank außen sitzenden Passagiere ist mit Hilfe von Dreipunkt-Sicherheitsgurten gewährleistet. Der in der Mitte der Sitzbank befindliche Passagier war bisher mittels eines Beckengurtes nur unzureichend gesichert. Zu Erhöhung der passiven Sicherheit finden in modernen Fahrzeugen nun auch für die in der Mitte der Rückbank sitzenden Personen Dreipunkt-Sicherheitsgurte Anwendung.

Um auch für diesen Fall die Kippbarkeit der Rücklehne zu gewährleisten, muß der Retraktor des mittleren Dreipunktgurtes an der Rücklehne befestigt sein. Bei einem Unfall wird durch die abrupte Verzögerung des Fahrzeugs der Passagier sehr stark beschleunigt. Dieser Beschleunigung und der damit einhergehenden Vorverlagerung des Passagiers wirkt der Dreipunkt-Sicherheitsgurt entgegen, wodurch in dem Sicherheitsgurt sehr hohe Kräfte auftreten, die über den Retraktor auf die Rücklehne übertragen werden. Diese Kräfte und die an einem Punkt fehlende Abstützung der Rücklehne an der Karosserie bzw. dem Fahrzeugboden führen zu einem Einknicken der Rücklehne. Dadurch ist das Verletzungsrisiko der auf der Sitzbank beförderten Personen bei einem Unfall vergrößert.

Zur Erhöhung der Stabilität von Rücklehnen ist es bekannt, Stützkonstruktionen vorzusehen. Bei einer ungeteilten kippbaren Sitzbank werden zwei Profile verwendet, die miteinander verschweißt sind, wobei mindestens eines der Profile mit röhrenförmigen Elementen zur Verstärkung der Rücklehne versehen ist (vgl. GB-A-22 298 123). Bei einer Sitzbank der gattungsgemäßen Art wird für die in zwei Teile aufgeteilte kippbare Rücklehne eine durchgehende Platte verwendet, die mit länglichen Verstärkungsrippen versehen ist (vgl. US-A-44 93 505). Bei einer anderen Rücklehne der gattungsgemäßen Art sind zusätzlich zu einer ausgesteiften wannenmäßigen Rückwand am Boden Sicken verwendet (vgl. DE-U-295 14 752). Zwar führt eine Stützkonstruktion zur Erhöhung der Stabilität der Rücklehne. Jedoch ist durch das zusätzlich verwendete Material das Gewicht der Rücklehne erhöht, was zu einem insgesamt erhöhten Fahrzeuggewicht und damit einem erhöhten Kraftstoffverbrauch führt.

Hier will die Erfindung Abhilfe schaffen. Der Erfindung liegt die Aufgabe zugrunde, eine kippbare Rücklehne zu schaffen, die ohne Verwendung zusätzlicher Stützkonstruktionen eine hohe Stabilität aufweist und dabei in der Herstellung kostengünstig ist. Gemäß der Erfindung wird diese Aufgabe dadurch gelöst, daß wenigstens eines der Teile der Rücklehne mindestens zwei Profile aufweist, die miteinander verschweißt sind und von denen mindestens eines mit Sicken versehen ist, die paarweise deckungsgleich übereinander angeordnet sind, wobei die Profile zwischen den Sicken über Profilrücken miteinander in Verbindung treten.

Mit der Erfindung ist eine Rücklehne geschaffen, die aufgrund der durch die Sicken hervorgerufenen rohrartigen Einschlüsse eine hohe Biegesteifigkeit aufweist. Sie ist daher stabil und kommt ohne zusätzliche Stützkonstruktionen aus, wodurch das Gewicht gering gehalten ist. Infolgedessen ist das Fahrzeuggewicht insgesamt reduziert, was zu einer Verminderung des Kraftstoffverbrauchs führt. Außerdem sind die Produktionskosten niedrig. Durch die paarweise deckungsgleiche Anordnung der Sicken übereinander sind die Profile nahezu identisch ausgeführt, was die Kosten zusätzlich reduziert. Darüber hinaus ist aufgrund der angenähert runden Form der durch die Sicken gebildeten Einschlüsse die Biegesteifigkeit zusätzlich erhöht.

In Ausgestaltung der Erfindung sind die Profile als Preßteile aus Blech hergestellt. Dadurch ist eine fertigungstechnisch wenig aufwendige, nicht personalintensive und damit kostengünstige Fertigung der Rücklehnen ermöglicht.

In vorteilhafter Weiterbildung der Erfindung sind die von den Sicken ausgebildeten Hohlräume mindestens teilweise ausgeschäumt. Durch das Ausschäumen ist die Stabilität der Rücklehne zusätzlich erhöht.

Vorteilhaft sind die Schäummaterialien Aluminium oder Hartschaum. Diese Materialien sind einerseits leicht, so daß das Gewicht der Rücklehne nur geringfügig erhöht ist; andererseits passen sie sich der Form der Hohlräume gut an.

Vorzugsweise sind die Profile miteinander mittels Roll- oder Laserschweißung verschweißt. Durch diese Art der Verschweißung ist zusätzlich eine deutliche Erhöhung der Stabilität erreicht, da ein Aufreißen an einer Schweißnaht, wie dies beispielsweise bei Punktschweißung nach Art eines Reißverschlusses geschehen kann, vermieden ist. Vorzugsweise erfolgt die Schweißung entlang der Profilrücken.

In einer anderen Ausgestaltung der Erfindung ist auf dem Umfang eines der Profile ein Trimmkanal vorgesehen. Der Trimmkanal dient zur Befestigung des Stoffbezugs der Polsterung der Rückbank.

In weiterer Ausgestaltung sind an mindestens einem der Profile Aufnahmen vorgesehen. Die Aufnahmen dienen der Befestigung von Sicherheits- oder Komfortzubehör.

Ein Ausführungsbeispiel der Erfindung ist in der Zeichnung dargestellt und wird nachfolgend im einzelnen beschrieben. Es zeigen:

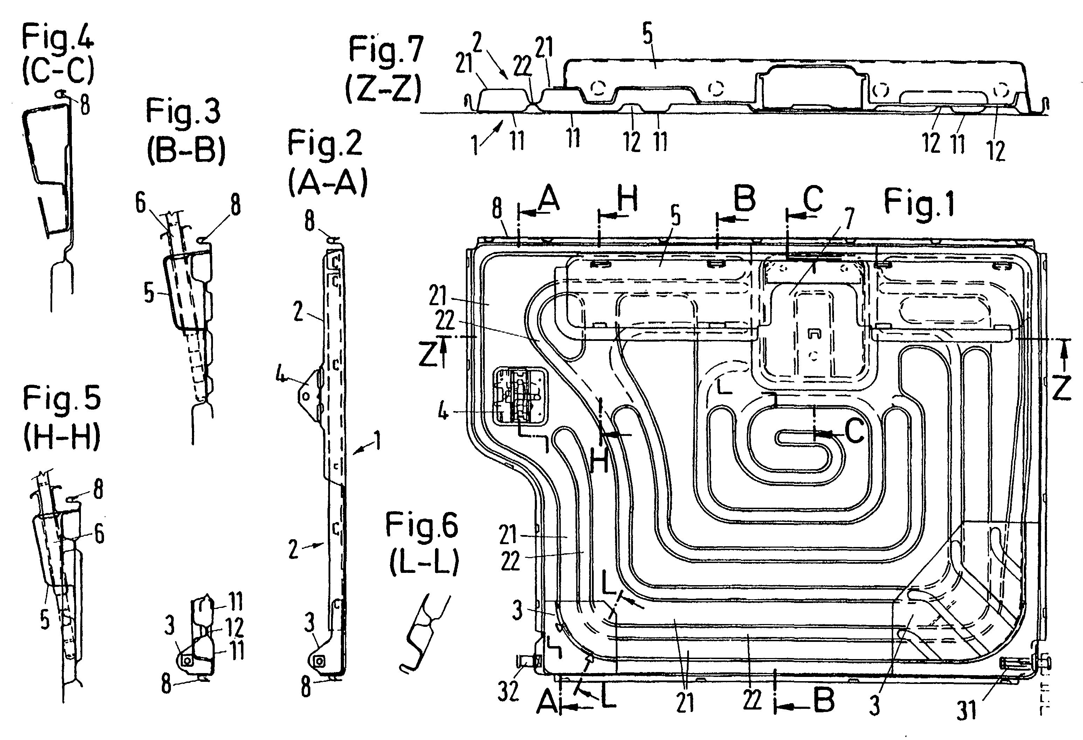

Figur 1 die Ansicht eines Teils einer Rücklehne;
Figur 2 einen Schnitt entlang der Schnittlinie A-A aus Figur 1;
Figur 3 einen Schnitt entlang der Schnittlinie B-B aus Figur 1;
Figur 4 einen Schnitt entlang der Schnittlinie C-C aus Figur 1;
Figur 5 einen Schnitt entlang der Schnittlinie H-H aus Figur 1;
Figur 6 einen Schnitt entlang der Schnittlinie L-L aus Figur 1;
Figur 7 einen Schnitt entlang der Schnittlinie Z-Z aus Figur 1.

Als Ausführungsbeispiel ist der 2/3 ausmachende Teil einer Rücklehne einer Sitzbank gewählt, die asymmetrisch im Verhältnis 1/3 zu 2/3 geteilt ist. Er weist eine im wesentlichen rechteckige Form auf, wobei an der der Mittellinie der Rücklehne abgewandten Seite eine Aussparung vorgesehen ist. Die Aussparung bietet dem Radhaus der Hinterachse des jeweiligen Fahrzeugs nach Einbau der Rücklehne in ein Fahrzeug Platz.

Der Teil der Rücklehne besteht aus zwei Profilen 1, 2, die miteinander verschweißt sind. Das im eingebauten Zustand der Rücklehne dem Kofferraum zugewandte Profil 2 weist an seinem dem Fahrzeugboden zugewandten Ende Aufnahmen 3 für Scharniere auf, die das Umklappen der Rücklehne ermöglichen. Die dem 1/3 der Rücklehne ausmachenden Teil zugewandte Aufnahme 3 nimmt einen Bolzen 31 auf, über den die beiden Teile der Rückbank miteinander verbunden sind. Die dem anderen Teil abgewandte Aufnahme 3 weist einen Bolzen 32 auf. Die Bolzen 31 und 32 sind fluchtend zueinander angeordnet. Durch ihre Längsmittellinie verläuft die Drehachse der kippbaren Rücklehne.

Auf dem über der Aussparung für den Radkasten vorgesehene Vorsprung ist auf dem Profil 2 eine Aufnahme 4 zur Verankerung von Vorrichtungen vorgesehen, die der lösbaren Befestigung der Rücklehne mit der Karosserie des Fahrzeugs dienen. Weiterhin weist das Profil 2 der Rücklehne eine Aufnahme 5 auf, mit der Kopfstützen an der Rücklehne befestigbar sind. Die Kopfstützen sind mit an ihnen vorgesehenen Stangen 6 in die Aufnahme 5 einsteckbar. Die Aufnahme 5 ist auf das Profil 2 aufgeschweißt. An dem 2/3 der Rücklehne ausmachenden Teil sind zwei Kopfstützen vorgesehen; an dem 1/3 der Rücklehne ausmachenden Teil ist dann eine Kopfstütze vorgesehen.

Zwischen den beiden Einsteckmöglichkeiten für die beiden Kopfstützen ist an dem dem Fahrzeugboden abgewandten Ende des Profils 2 ein Retraktor 7 angeordnet. Der Retraktor 7 gehört zu einem - nicht dargestellten - Dreipunkt-Sicherheitsgurt, der für einen in der Mitte der Rückbank sitzenden Passagier vorgesehen ist. Er hat die Aufgabe einerseits im Falle einer schnellen Vorverlagerung der durch den Sicherheitsgurt gesicherten Person automatisch zu arretieren, andererseits den Sicherheitsgurt automatisch aufzurollen, wenn die Person ihn abgeschnallt hat. Darüber hinaus können an der Rücklehne Aufnahmen beispielsweise für Gurtschlösser oder eine klappbare Armlehne vorgesehen sein. Auch kann an der Rücklehne eine Durchladeöffnung mit einer Klappe vorgesehen sein.

Auf dem Umfang des Profils 1 ist ein Trimmkanal 8 vorgesehen. Der Trimmkanal 8 dient der Aufnahme eines Stoffbezuges, mit dem eine Polsterfläche der Rücklehne bezogen ist. Die Polsterfläche ist dabei aus PU-Schaum hergestellt und formt die Polsterseite der Rücklehne aus. Der Trimmkanal 8 besteht aus Kederband mit einem C-Profil.

Die Profile 1, 2 weisen (vorzugsweise wie im Ausführungsbeispiel dargestellt) Sicken 11, 21 auf, die gemäß der Erfindung paarweise deckungsgleich übereinander angeordnet sind. Es ist jedoch auch möglich, daß nur entweder das Profil 1 Sicken 11 oder das Profil 2 Sicken 21 aufweist, so daß auf das eine im wesentlichen ebene Profil das oder die anderen Profile aufgeschweißt sind, welche dann die Sicken aufweisen. Durch das Verschweißen von mit Sicken versehenen Profilen entstehen zwischen den Profilen Hohlräume, die die Form von Rohren aufweisen. Der Querschnitt der Hohlräume ist im Ausführungsbeispiel im wesentlichen viereckig. Der Querschnitt ist jedoch nicht auf diese Form beschränkt; vielmehr sind auch kreisrunde, halbrunde, elliptische oder andere mehreckige Hohlraum-Querschnitte möglich.

Die zwischen den Profilen 1, 2 durch die Sicken 11, 21 ausgebildeten Hohlräume können teilweise oder vollständig ausgeschäumt sein. Als Materialien finden leichte Werkstoffe Anwendung, wie beispielsweise Aluminium oder Hartschaum. Die verwendeten Materialien müssen dabei in der Lage sein, sich der Form der Hohlräume nach dem Aufschäumen gut anzupassen.

Die Sicken 11, 21 sind im wesentlichen spiralförmig angeordnet. Neben dieser Art der Anordnung besteht die Möglichkeit, die Sicken horizontal, vertikal, diagonal, in Form konzentrischer Kreise oder Ellipsen oder ähnlichem anzuordnen. Auch mit diesen Formen ist eine vergleichbar hohe Stabilität der Rücklehne zu erzielen.

Die jeweils nebeneinander liegenden Sicken 11 des Profils 1 sowie die Sicken 21 des Profils 2 sind mit Hilfe von Profilrücken 12 des Profils 1 sowie Profilrücken 22 des Profils 2 miteinander verbunden. Über die Profilrücken 12, 22 treten die Profile 1, 2 miteinander in Verbindung. Entlang der Profilrücken 12, 22 sind sie miteinander verschweißt. Das Verschweißen erfolgt vorzugsweise mittels Roll- oder Laserschweißung, da dies zur Erhöhung der Festigkeit der Rücklehne beiträgt.

## Patentansprüche

1. Sitzbank für ein Fahrzeug mit einer kippbaren Rücklehne, die in zwei Teile aufgeteilt ist, **dadurch gekennzeichnet, daß** wenigstens eines der Teile der Rücklehne mindestens zwei Profile (1, 2) aufweist, die miteinander verschweißt sind und von denen mindestens eines mit Sicken (11, 21) versehen ist, die paarweise deckungsgleich übereinander angeordnet sind, wobei die Profile (1, 2) zwischen den Sicken (11, 21) über Profilrücken (12, 22) miteinander in Verbindung treten.

2. Sitzbank nach Anspruch 1, **dadurch gekennzeichnet, daß** die von den Sicken (11, 21) ausgebildeten Hohlräume mindestens teilweise ausgeschäumt sind.

3. Sitzbank nach Anspruch 2, **dadurch gekennzeichnet, daß** die Schäummaterialien Aluminium oder Hartschaum sind.

4. Sitzbank nach einem der Ansprüche 1 bis 3, **dadurch gekennzeichnet, daß** die Profile (1, 2) als Preßteile hergestellt sind.

5. Sitzbank nach einem der Ansprüche 1 bis 4, **dadurch gekennzeichnet, daß** die Profile (1, 2) miteinander mittels Roll- oder Laserschweißung verschweißt sind.

6. Sitzbank nach Anspruch 5, **dadurch gekennzeichnet, daß** die Schweißung entlang der Profilrücken (12, 22) erfolgt.

7. Sitzbank nach einem der Ansprüche 1 bis 6, **dadurch gekennzeichnet, daß** auf dem Umfang eines der Profile ein Trimmkanal (8) vorgesehen ist.

8. Sitzbank nach einem der Ansprüche 1 bis 7, **dadurch gekennzeichnet, daß** an dem Profil (2) Aufnahmen vorgesehen sind.

## Claims

1. A vehicle bench seat having a tilting backrest which is divided into two parts, **characterised in that** at least one of the parts of the backrest has at least two profiles (1, 2), which are welded together and of which at least one is provided with beads (11, 21) which are arranged one above another such that they are mutually congruent in pairs, the profiles (1, 2) coming into contact with one another between the beads (11, 21) by way of profile backs (12, 22).

2. A bench seat according to Claim 1, **characterised in that** the cavities formed by the beads (11, 21) are at least partially filled with foam.

3. A bench seat according to Claim 2, **characterised in that** the foam materials are aluminium or high-resistance foam.

4. A bench seat according to one of Claims 1 to 3, **characterised in that** the profiles (1, 2) are manufactured as pressed parts.

5. A bench seat according to one of Claims 1 to 4, **characterised in that** the profiles (1, 2) are welded together by means of roller or laser welding.

6. A bench seat according to Claim 5, **characterised in that** the welding is effected along the profile backs (12, 22).

7. A bench seat according to one of Claims 1 to 6, **characterised in that** a trim channel (8) is provided at the periphery of one of the profiles.

8. A bench seat according to one of Claims 1 to 7, **characterised in that** receiving means are provided on the profile (2).

## Revendications

1. Banquette pour un véhicule avec un dossier rabattable subdivisé en deux parties, **caractérisée en ce qu'**au moins l'une des parties du dossier présente au moins deux profilés (1, 2) soudés entre eux, dont l'un au moins est muni de moulures (11, 21) superposées par paires coïncidentes, les profilés (1, 2) s'assemblant entre eux entre les moulures (11, 21) par l'intermédiaire de dos de profilés (12, 22).

2. Banquette suivant la revendication 1, **caractérisée par** un moussage au moins partiel des espaces creux réalisés par les moulures (11, 21).

3. Banquette suivant la revendication 2, **caractérisée en ce que** les matériaux de moussage sont de l'aluminium ou de la mousse rigide.

4. Banquette suivant l'une des revendications 1 à 3, **caractérisée en ce que** les profilés (1, 2) sont fabriqués comme des pièces embouties à la presse.

5. Banquette suivant l'une des revendications 1 à 4, **caractérisée en ce que** les profilés (1, 2) sont soudés entre eux par soudage par roulette ou laser.

6. Banquette suivant la revendication 5, **caractérisée en ce que** le soudage est assuré le long des dos de profilés (12, 22).

7. Banquette suivant l'une des revendications 1 à 6, **caractérisée en ce qu'**un passant (8) est prévu sur le pourtour de l'un des profilés.

8. Banquette suivant l'une des revendications 1 à 7, **caractérisée en ce que** des logements sont prévus sur le profilé (2).
